# EUROPEAN PATENT APPLICATION

(11) **EP 3 480 523 A1**
(43) Date of publication of application: **08.05.2019**
(21) Application number: 17819848.7
(22) Date of filing: 13.06.2017
(51) Int. Cl.: F23R 3/34, F02C 3/22, F02C 3/30, F23R 3/28, F23R 3/30

(54) **GAS TURBINE COMBUSTOR**

(30) Priority: 30.06.2016 JP 2016129907
(71) Applicant: Kawasaki Jukogyo Kabushiki Kaisha, Kobe-shi, Hyogo 650-8670 (JP)
(72) Inventor: OGATA, Masahiro, Kobe-shi, Hyogo 650-8670 (JP); ODA, Takeo, Kobe-shi, Hyogo 650-8670 (JP)
(74) Representative: Dantz, Jan Henning
(86) International application number: PCT/JP2017/021766
(87) International publication number: WO 2018/003488

(57) **Abstract**

A gas turbine combustor includes a casing coupled to a main housing; a liner having a configuration in which a combustion chamber extending in an axial direction is formed inside the liner, an upstream portion including a head portion of the liner is accommodated in the casing, and a downstream portion located downstream of the upstream portion is accommodated in the main housing; a main burner provided at the head portion of the liner; a supplemental burner including an injection port located in an air passage formed between the liner and the casing, the supplemental burner being configured to inject an air-fuel mixture in which supplemental burning fuel containing hydrogen and the compressed air taken into the supplemental burner through the space formed between the liner and the casing are mixed; and a duct including an entrance connected to the injection port of the supplemental burner and an exit which opens in the combustion chamber, the duct having a structure in which at least a portion of a region extending from the entrance to the exit, extends in parallel with the axial direction.

## Description

### Technical Field

The present invention relates to a structure of a combustor (gas turbine combustor) mounted in a gas turbine engine.

### Background Art

As a combustor of a gas turbine engine, there is known a combustor having a multi-stage burner configuration including a main burner which supplies fuel (or premixed air-fuel) to an upstream primary combustion region of a combustion chamber, a pilot burner which supplies the fuel to the primary combustion region, and a supplemental burner which supplies the fuel (or the premixed air-fuel) to a secondary combustion region of the combustion chamber which is located downstream of the primary combustion region. Patent Literature 1 discloses such a gas turbine combustor.

### Citation List

### Patent Literature

Patent Literature 1: International Publication WO 2015/037295

### Summary of Invention

### Technical Problem

In recent years, it has been required that a hydrogen gas generated from a chemical plant or the like be efficiently utilized as fuel for a gas turbine combustor. Patent Literature 1 discloses that a gas containing hydrogen is utilized as the fuel. However, hydrogen is significantly lightweight and high in speed, among fuel gases. For this reason, the gas containing hydrogen is not easily mixed with compressed air. If the fuel gas containing hydrogen and air are injected from the burner in a state in which they are not sufficiently mixed, combustion efficiently may be reduced under the condition in which an engine load is low, and NOx emission amount may be increased under the condition in which the engine load is high.

Typically, the gas turbine combustor has a double-wall structure including a liner with an elongated tube shape, and a casing with an elongated tube shape, covering the liner. The base end portion of the casing protrudes from a main housing of a gas turbine body and is secured to the main housing. In the gas turbine combustor disclosed in Patent Literature 1, the supplemental burner is provided to penetrate the peripheral wall of the casing and the peripheral wall of the liner, and a pipe used to supply the fuel to the supplemental burner and the supplemental burner are connected to each other at the outer periphery of the casing. Regarding this gas turbine combustor, there is a room for improvement in facilitating premixing of the fuel gas containing hydrogen and compressed air, which are injected from the supplemental burner.

In view of the above-described circumstances, the present invention proposes a structure of the gas turbine combustor which suitably uses the fuel gas containing hydrogen as the fuel for the supplemental burner, by having a structure for facilitating premixing of the fuel gas containing hydrogen and the compressed air, which are injected from the supplemental burner.

### Solution to Problem

According to an aspect of the present invention, there is provided a gas turbine combustor which combusts fuel with compressed air supplied from a compressor, and supplies a combustion gas to a turbine, the gas turbine combustor comprising: a casing coupled to a main housing of the turbine; a liner having a configuration in which a combustion chamber extending in an axial direction of the gas turbine combustor is formed inside the liner, an upstream portion including a head portion of the liner is accommodated in the casing, and a downstream portion located downstream of the upstream portion is accommodated in the main housing; a main burner provided at the head portion of the liner; a supplemental burner including an injection port located between the liner and the casing, the supplemental burner being configured to inject an air-fuel mixture in which supplemental burning fuel containing hydrogen and the compressed air taken into the supplemental burner through a space formed between the liner and the casing are mixed; and a duct including an entrance connected to the injection port of the supplemental burner and an exit which opens in the combustion chamber, the duct having a structure in which at least a portion of a region extending from the entrance to the exit extends in parallel with the axial direction.

In the gas turbine combustor with the above-described configuration, the supplemental burning fuel injected from the injection port of the supplemental burner, flows through the duct, and is injected into the combustion chamber from the exit of the duct. The easiest method of facilitating mixing between the supplemental burning fuel and the compressed air is to extend a premix passage. By providing the duct, it becomes possible to ensure a sufficient premix passage of an air-fuel mixture in which the supplemental burning fuel and the compressed air are premixed. The air-fuel mixture in which the fuel and the compressed air have been sufficiently mixed is injected to the combustion chamber. As a result, combustion efficiency of the supplemental burner can be improved, and emission amount of NOx can be reduced.

In the gas turbine combustor disclosed in the above-described Patent Literature 1, the secondary combustion region is provided at a location which is downstream of the primary combustion region so that the fuel supplied to the primary combustion region is sufficiently combusted and then the combustion gas is introduced into the secondary combustion region. To this end, the pilot burner and the main burner are located on an upstream side of the combustion chamber and the supplemental burner is located on a downstream side of the combustion chamber, with a sufficient distance between the pilot burner and the main burner, and the supplemental burner. In addition, since the supplemental burner is required to be disposed outside the main housing of the turbine body, the amount of a protruding portion of the casing of the combustor, from the main housing of the gas turbine body, tends to increase. As the amount of the protruding portion of the casing of the combustor, from the main housing of the gas turbine body, increases, the weight of the casing increases, and a coupling portion between the casing and the main housing is required to have high robustness. As a result, cost increases and handing becomes difficult.

To solve the above-described problem, in the above-described gas turbine combustor, the exit of the duct may open in the combustion chamber at the downstream portion of the liner.

In the above-described gas turbine combustor, as in the conventional example, the axial region from the head portion of the liner to the injection port of the supplemental burner is covered by the casing. By providing the duct, the location where the supplemental burning fuel is injected to the combustion chamber, is made distant in the axial direction from the injection port of the supplemental burner. This makes it possible to suppress the amount of the protruding portion of the casing of the combustor, from the main housing of the gas turbine body while ensuring a sufficient length of the premix passage.

In the above-described gas turbine combustor, the duct may include an air introduction port at a location that is in the vicinity of the exit, the space formed between the liner and the casing and an inside of the duct being in communication with each other via the air introduction port.

In the gas turbine combustor with the above-described configuration, the compressed air is introduced from the air passage into the duct through the air introduction port. The compressed air introduced into the duct flows in a direction substantially parallel to the flow of the gas inside the duct along the inner wall of the duct. This increases the flow velocity of the fluid on the inner wall surface of the duct. As a result, backfire at the exit of the duct can be prevented.

In the above-described gas turbine combustor, the supplemental burner may be supported by a peripheral wall of the casing, and the injection port of the supplemental burner may open in a direction parallel to a radial direction perpendicular to the axial direction, and the exit of the duct may open in the direction parallel to the radial direction.

In accordance with this arrangement of the supplemental burner, piping for the supplemental burner can be easily performed while avoiding other constituents such as the main burner.

In the above-described gas turbine combustor, the supplemental burner may be supported by a peripheral wall of the casing, and the injection port of the supplemental burner opens in a direction parallel to the axial direction, and the exit of the duct may open in a direction parallel to a radial direction perpendicular to the axial direction.

In accordance with this arrangement of the supplemental burner, piping for the supplemental burner can be easily performed while avoiding other constituents such as the main burner. In addition, since the duct with a J-shape, in which the number of bending is less, can be used, a pressure loss can be suppressed.

In the above-described gas turbine combustor, the supplemental burner may be disposed around the main burner, and the injection port of the supplemental burner may open in a direction parallel to the axial direction, and the exit of the duct may open in a direction parallel to a radial direction perpendicular to the axial direction.

In accordance with this arrangement of the supplemental burner, the pipe length of the duct can be increased, and the premix passage for supplemental burning fuel can be ensured.

In the above-described gas turbine combustor, an entrance-side end portion (end portion closer to the entrance) of the duct may be secured to the supplemental burner, and an exit-side end portion (end portion closer to the exit) of the duct may be inserted into a through-hole provided in the liner with an allowance (the exit-side end portion may be loosely inserted into the through-hole).

In the above-described gas turbine combustor, the connection portion of the duct and the liner is not fixed. This makes it possible to prevent a situation in which a thermal stress concentrates on the duct due to a difference in thermal deformation amount between the duct and the liner.

In the above-described gas turbine combustor, the entrance of the duct may be disposed to face the injection port of the supplemental burner, an exit-side end portion of the duct may be inserted into a through-hole provided in the liner with an allowance, and at least a portion of the region extending from the entrance of the duct to the exit of the duct, may be retained by a retaining member provided at the liner.

In the above-described gas turbine combustor, the supplemental burner and the duct are not secured (fixed) to each other, and the duct and the liner are not secured (fixed) to each other. This makes it possible to avoid a situation in which the thermal stress concentrates on the duct, due to a difference in thermal deformation amount between the duct and the liner.

### Advantageous Effects of Invention

In accordance with the present invention, it is possible to provide a structure of a gas turbine combustor which suitably uses a fuel gas containing hydrogen, as fuel for a supplemental burner.

### Brief Description of Drawings

Fig. 1 is a view showing the schematic configuration of a gas turbine power generation system which uses a gas turbine combustor according to one embodiment of the present invention.
Fig. 2 is a longitudinal sectional view showing the schematic configuration of the gas turbine combustor according to one embodiment of the present invention.
Fig. 3 is an enlarged cross-sectional view of a supplemental burner.
Fig. 4 is a cross-sectional view of the supplemental burner, which is taken along line IV-IV of Fig. 3.
Fig. 5 is an enlarged longitudinal sectional view of an exit-side end portion (end portion which is closer to an exit) of a duct.
Fig. 6 is a view showing a flow of assembly of the combustor. Fig. 6(a) shows a state in which ducts are inserted into a casing. Fig. 6(b) shows a state in which a liner is inserted into the casing. Fig. 6(c) shows a state in which a burner unit is coupled to the liner.
Fig. 7 is a view showing Modified Example 1 of arrangement of the supplemental burners.
Fig. 8 is a view showing Modified Example 2 of arrangement of the supplemental burners.
Fig. 9 is a view showing Modified Example of a support structure of the ducts.

### Description of Embodiments

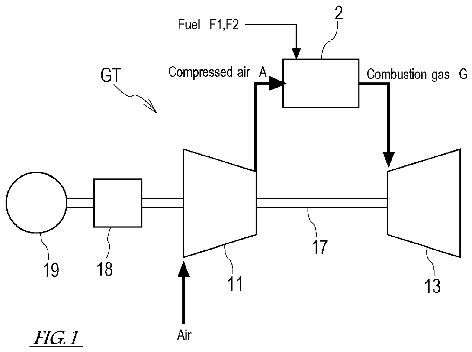

Next, the embodiment of the present invention will be described with reference to the drawings. Fig. 1 is a view showing the schematic configuration of a gas turbine power generation system which uses a gas turbine combustor (hereinafter will be simply referred to as "combustor 2") according to one embodiment of the present invention. As shown in Fig. 1, a gas turbine engine GT includes a compressor 11, a combustor 2, and a turbine 13 ("will also be referred to as "turbine body"), as major constituents. The combustor 2 combusts compressed air A supplied from the compressor 11 and fuel F1 and fuel F2 to generate a combustion gas G in a high-temperature and high-pressure state, which is supplied to the turbine 13. By the combustion gas G, the turbine 13 is driven. The compressor 11 is driven by the turbine 13 via a rotary shaft 11. The turbine 13 drives a load such as an electric generator 19 via a reduction gear (speed reducer) 18.

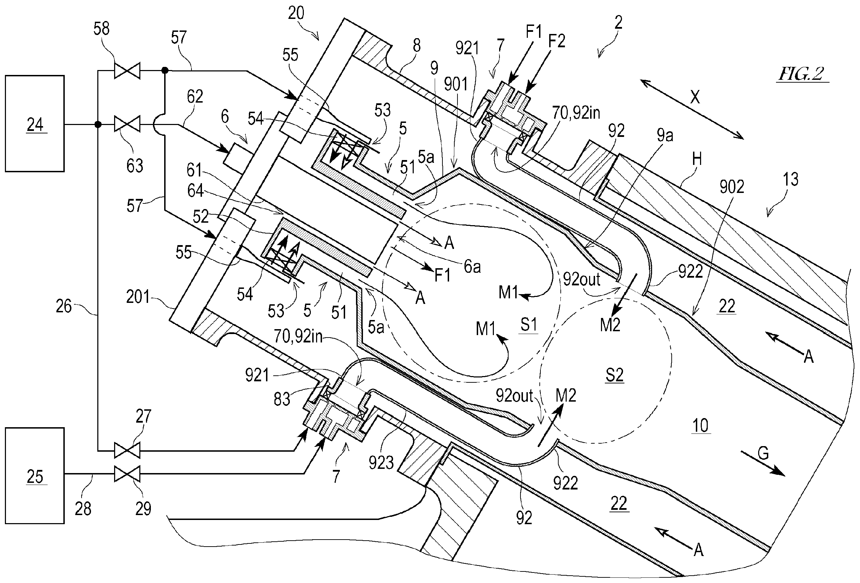

Fig. 2 is a longitudinal sectional view showing the schematic configuration of the combustor 2 according to one embodiment of the present invention. Fig. 2 shows a fuel supply system for supplying the fuel to the combustor 2, in addition to the combustor 2. As shown in Fig. 2, the combustor 2 according to the present embodiment includes a cylindrical casing 8 extending in an axial direction X of the combustor 2, a substantially cylindrical liner 9 (combustion tube) extending in the axial direction X, main burners 5, a pilot burner 6, and supplemental burners 7. The first end portion of the casing 8 in the axial direction X is fastened to a main housing H of the turbine 13.

The liner 9 is concentrically inserted into the casing 8. Between the inner wall of the casing 8 and the outer wall of the liner 9, an annular air passage 22 extending in the axial direction X is formed. The compressed air A from the compressor 11 is introduced into the air passage 22.

A combustion chamber 10 extending in the axial direction X is formed inside the liner 9. The combustor 2 of the present embodiment is constructed as a revered flow can type in which the compressed air A introduced into the air passage 22 and the combustion gas G flow in opposite directions, inside the combustor 2. Herein, "upstream" and "downstream" are defined based on the flow of the combustion gas G in the combustion chamber 10.

Inside the combustion chamber 10, a primary combustion region S1 which is a combustion region where the fuel injected from the main burners 5 is combusted, a secondary combustion region S2 which is a combustion region where the fuel injected from the supplemental burners 7 is combusted, and a downstream region, are defined, in this order from an upstream side. A passage cross-sectional area of the primary combustion region S1 is larger than that of the secondary combustion region S2. The liner 9 includes a reduced-diameter portion 9a at a boundary between the primary combustion region S1 and the secondary combustion region S2.

An upstream portion 901 of the liner 9, including a head portion which is the first end portion of the liner 9 in the axial direction X, is accommodated in the casing 8. A downstream portion 902 of the liner 9 which is located downstream of the upstream portion 901 is accommodated in the main housing H of the turbine 13. In the present embodiment, the upstream portion 901 extends from the head portion of the liner 9 to substantially the reduced-diameter portion 9a of the liner 9, while the downstream portion 902 includes a portion of the liner 9 which is substantially downstream of the reduced-diameter portion 9a. Through-holes 90 into which exit-side end portions (end portions closer to exits) 922 of ducts 92 which will be described later are insertable are formed in the downstream portion 902 of the liner 9.

A burner unit 20 including the main burners 5 and the pilot burner 6 constructed as a unit is provided at the head portion of the liner 9. Each of the main burners 5 is configured to inject first premixed air-fuel M1 to the primary combustion region S1 inside the combustion chamber 10 and combust the first premixed air-fuel M1. The first premixed air-fuel M1 is an air-fuel mixture of main fuel and the compressed air A. The pilot burner 6 is configured to directly inject pilot fuel to the primary combustion region S1 and combust the pilot fuel while diffusing the pilot fuel.

In the present embodiment, the main fuel and the pilot fuel are first fuel F1 supplied from a first fuel source 24. The first fuel F1 may be, for example, hydrocarbon-based fuel containing hydrocarbon with 60 volume % or more. As examples of the hydrocarbon-based fuel, there are a natural gas, ventilation air methane (VAM), the natural gas mixed with hydrogen which is less than 5%, the ventilation air methane mixed with hydrogen which is less than 5%, liquid fuel such as heating oil (kerosene) and light oil, and the like. The hydrocarbon-based fuel may be selectively used.

The pilot burner 6 includes a pilot fuel nozzle 61. The exit of the pilot fuel nozzle 61 is a pilot fuel injection port 6a. The pilot fuel injection port 6a is provided at a location where a substantially center axis of the cylindrical liner 9 extends through the pilot fuel injection port 6a. The pilot fuel nozzle 61 is connected to the first fuel source 24 (or a pilot fuel source which is not shown), via a fuel supply pipe 62. The fuel supply pipe 62 is provided with a flow rate control valve 63 which controls the flow rate of the pilot fuel injected from the pilot burner 6. An air nozzle 64 is formed to surround the pilot fuel nozzle 61 to inject combustion air in the air passage 22 to the combustion chamber 10.

In the pilot burner 6 with the above-described configuration, when the flow rate control valve 63 is opened, the pilot fuel (first fuel F1) is supplied from the first fuel source 24 to the pilot fuel nozzle 61 through the fuel supply pipe 62, and is injected from the pilot fuel injection port 6a of the pilot fuel nozzle 61 to the combustion chamber 10.

Each of the main burners 5 includes a passage member 52 forming a premix passage 51, a swirler 54 provided at an air inlet 53 which opens at an upstream side of the premix passage 51, and a main fuel nozzle 55 having an injection hole through which the first fuel F1 is injected toward the air inlet 53. The exits of the premix passages 51 are fuel injection ports 5a. The plurality of fuel injection ports 5a of the main burners 5 form an annular injection port row around the pilot fuel injection port 6a. The main fuel nozzles 55 are connected to the first fuel source 24 via fuel supply pipes 57. The fuel supply pipes 57 are provided with a flow rate control valve 58 which controls the flow rate of the first fuel F1.

In the main burners 5 with the above-described configuration, when the flow rate control valve 58 is opened, the first fuel F1 is supplied from the first fuel source 24 to the main fuel nozzles 55 through the fuel supply pipes 57. The first fuel F1 injected from the injection hole of each of the main fuel nozzles 55 toward the air inlet 53, and the compressed air A in the air passage 22 are swirled by the swirler 54 and introduced into the premix passage 51 through the air inlet 53. The first fuel F1 and the compressed air A are premixed in the premix passage 51, and thus the first premixed air-fuel M1 is injected to the combustion chamber 10.

The plurality (e.g., 2 to 12) of supplemental burners 7 are provided at equal intervals in the circumferential direction of the casing 8 and are radially inserted through the peripheral wall of the casing 8. The plurality of supplemental burners 7 include injection ports 70 each of which is located in the air passage 22 formed between the liner 9 and the casing 8. The plurality supplemental burners 7 are configured to inject supplemental burning fuel from the injection ports 70. In the present embodiment, the supplemental burning fuel is at least one of second fuel F2 from a second fuel source 25 and the first fuel F1 from the first fuel source 24.

As the second fuel F2, a gas having a composition different from that of the first fuel F1 and containing hydrogen with a concentration which is more than a stable combustion limit concentration, for example, concentration which is more than 10 volume %, may be used. The hydrogen concentration of the second fuel F2 is preferably, 20 volume % or more, and more preferably, 30 volume % or more. This hydrogencontaining gas is, for example, a hydrogen gas itself (100 volume %), or a gas containing a hydrogen gas and a methane gas, a propane gas, or an inert (inactive) gas such as nitrogen.

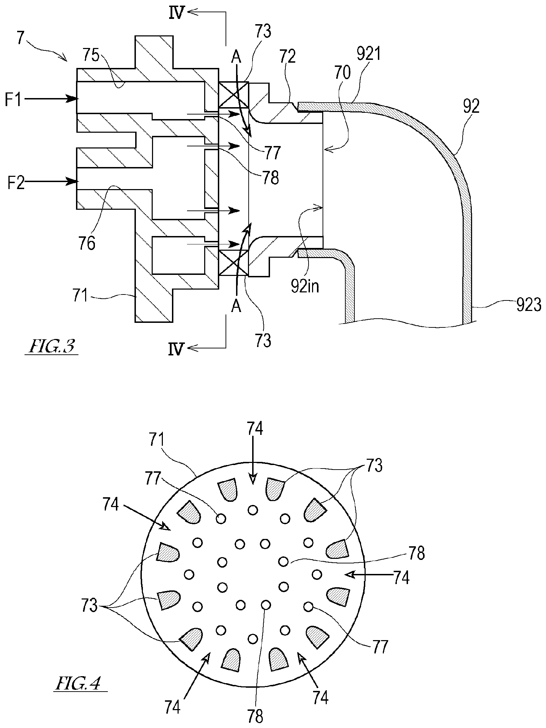

Fig. 3 is an enlarged cross-sectional view of the supplemental burner 7. Fig. 4 is a cross-sectional view of the supplemental burner 7, which is taken along line IV-IV of Fig. 3. As shown in Figs. 3 and 4, the supplemental burner 7 includes a fuel introduction block 71, an injection tube 72, and a plurality of guide columns 73 disposed between the fuel introduction block 71 and the injection tube 72 to couple the fuel introduction block 71 and the injection tube 72 to each other.

The fuel introduction block 71 is secured to and supported by the peripheral wall of the casing 8. The fuel introduction block 71 is provided with independent passages to independently introduce the first fuel F1 from the first fuel source 24 and the second fuel F2 from the second fuel source 25 into the injection tube 72. More specifically, the fuel introduction block 71 includes a first fuel introduction passage 75 into which the first fuel F1 is introduced, and the first fuel introduction passage 75 is connected to the first fuel source 24 via a first fuel supply pipe 26. The first fuel supply pipe 26 is provided with a flow rate control valve 27 which controls the flow rate of the first fuel F1 to be supplied to the supplemental burner 7. The fuel introduction block 71 includes a second fuel introduction passage 76 into which the second fuel F2 is introduced, and the second fuel introduction passage 76 is connected to the second fuel source 25 via a second fuel supply pipe 28. The second fuel supply pipe 28 is provided with a flow rate control valve 29 which controls the flow rate of the second fuel F2 to be supplied to the supplemental burner 7.

A wall of the fuel introduction block 71, the wall facing the injection tube 72, is provided with a plurality of first nozzles 77 which are in communication with the first fuel introduction passage 75 and a plurality of second nozzles 78 which are in communication with the second fuel introduction passage 76. In the present embodiment, the plurality of first nozzles 77 are annually arranged, and the plurality of second nozzles 78 are annually arranged and located inward of the plurality of first nozzles 77. The first fuel F1 in the first fuel introduction passage 75 is injected into the injection tube 72 through the plurality of first nozzles 77. The second fuel F2 in the second fuel introduction passage 76 is injected into the injection tube 72 through the plurality of second nozzles 78.

The plurality of guide columns 73 are provided outward of the first nozzles 77 and the plurality of second nozzles 78, and annularly arranged. The plurality of guide columns 73 are located in the air passage 22. Between adjacent guide columns 73, each of air entrances 74 is formed. Through the air entrances 74, the compressed air A in the air passage 22 flows into the injection tube 72.

The injection tube 72 is a tubular member located inside the air passage 22. An end opening of the injection tube 72 is the injection port 70 of the supplemental burner 7. Inside the injection tube 72, the first fuel F1 injected from the first nozzles 77 and the second fuel F2 injected from the second nozzles 78 are mixed with the compressed air A flowing into the injection tube 72 through the air entrances 74. The resulting air-fuel mixture is injected from the injection port 70.

An entrance-side end portion (end portion which is closer to an entrance) 921 of each of the ducts 92 is connected to the tip end of the injection tube 72. In other words, an entrance 92in of each of the ducts 92 is connected to the injection port 70 of the supplemental burner 7. An exit 92out of each of the ducts 92 opens in the secondary combustion region S2 inside the combustion chamber 10 at the downstream portion 902 of the liner 9 which is accommodated in the main housing H. In other words, the injection port 70 of the supplemental burner 7 which is located inside the casing 8 and the secondary combustion region S2 of the combustion chamber 10 which is located inside the main housing H are connected to each other via the duct 92. With this configuration, the air-fuel mixture of the first fuel F1, the second fuel F2, and the compressed air A, which is injected from the injection port 70 of the supplemental burner 7 is sufficiently mixed while flowing through the duct 92. The resulting second premixed air-fuel M2 is injected from the exit 92out of each of the ducts 92 into the secondary combustion region S2 of the combustion chamber 10.

Each of the ducts 92 is disposed in the air passage 22. In each of the ducts 92 according to the present embodiment, the entrance-side end portion 921 (entrance 92in) and the exit-side end portion 922 (exit 92out) open in a direction (radial direction) perpendicular to the axial direction X, and an axial extension portion 923 extending in parallel with the axial direction X is formed between the entrance-side end portion 921 and the exit-side end portion 922. The duct 92 entirely has a S-shape.

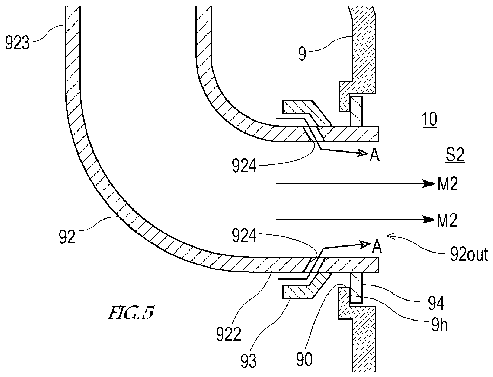

Fig. 5 is an enlarged longitudinal sectional view of the exit-side end portion 922 of the duct 92. As shown in Fig. 5, the exit-side end portion 922 of each of the ducts 92 is provided with a flange 94 radially protruding from the peripheral wall of the duct 92. The downstream portion 902 of the liner 9 which is located inside the main housing H of the turbine 13 is provided with the through-holes 90. An annular seat 9h is formed at the edge of each of the through-holes 90. The flange 94 is in contact with the annular seat 9h from the inner side of the liner 9. The inner diameter of the seat 9h is larger than the outer diameter of the exit-side end portion 922 of the duct 92 and smaller than the outer diameter of the flange 94. In this structure, the seat 9h and the flange 94 are in contact with other, so that the exit-side end portion 922 of the duct 92 cannot be disengaged from the through-hole 90. In contrast, the exit-side end portion 922 of the duct 92 is inserted into the through-hole 90 with an allowance (the exit-side end portion 922 of the duct 92 is loosely inserted into the through-hole 90), and is movable with respect to the liner 9 within the range of the through-hole 90.

Air introduction ports 924 open at locations which are in the vicinity of the exit-side end portion 922 of the duct 92. A guide 93 is provided at the outer peripheral side of each of the air introduction ports 924 to guide the compressed air A from the air passage 22 to the air introduction port 924. The above-described locations which are in the vicinity of the exit-side end portion 922 refer to locations that are a little backward from the exit-side end portion 922 of the duct 92 and where a tangential direction of the center axis of the duct 92 is substantially parallel to the injection direction of the second premixed air-fuel M2 from the exit 92out, and the outer wall of the duct 92 is exposed in the air passage 22.

In the air passage 22 formed between the liner 9 and the casing 8, the compressed air A flows from the lower side to the upper side in Fig. 5. In contrast, the flow of the compressed air A which is formed at the entrance of the guide 93 is along the outer wall of the exit-side end portion 922 of the duct 92 and is substantially perpendicular to the flow of the compressed air A in the air passage 22. Therefore, the compressed air A in the air passage 22 contacts the outer wall of the exit-side end portion 922 of the duct 92 and is led to the entrance of the guide 93. While the compressed air A is flowing through the guide 93, the compressed air A is faired into the flow along the outer wall of the exit-side end portion 922 of the duct 92.

The air introduction ports 924 are annular slits which are intermittently provided. Each of the air introduction ports 924 is inclined with respect to the thickness direction of the wall of the duct 92 so that its inner wall side is downstream of its outer wall side. Because of the shape of the air introduction ports 924, the compressed air A which has flowed through the air introduction ports 924 is introduced into the duct 92, in a state in which the compressed air A includes a velocity component parallel to the flow of the second premixed air-fuel M2 at the exit 92out of the duct 92 and a velocity component toward the center (radially inward side) of the pipe of the duct 92. The compressed air A having been faired by the guides 93 and the air introduction ports 924 in the above-described manner flows in the radially inward direction of the duct 92, in a region which is in the vicinity of the exit 92out of the duct 9. This allows the fluid in a region which is in the vicinity of the inner wall of the duct 92 to flow in the radially inward direction of the duct 92. Therefore, it becomes possible to prevent a situation in which the flow of the fluid along the inner wall of the exit-side end portion 922 of the duct 92 is stagnant. By increasing the flow velocity of the fluid in a region which is in the vicinity of the inner wall of the exit-side end portion 922 of the duct 92 in the above-described manner, backfire into the duct 92 is prevented.

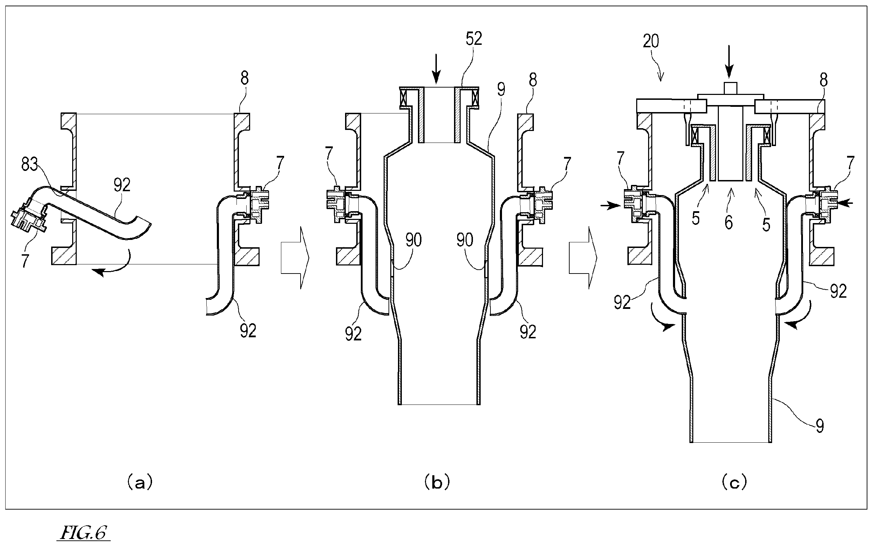

Next, an assembly method of the combustor 2 with the above-described configuration, will be described. Fig. 6 is a view showing a flow of assembly of the combustor 2. Fig. 6(a) shows a state in which the ducts 92 are inserted into the casing 8. Fig. 6(b) shows a state in which the liner 9 is inserted into the casing 8. Fig. 6(c) shows a state in which the burner unit 20 is coupled to the liner 9.

Initially, as shown in Fig. 6(a), the entrance-side end portion 921 of each of the ducts 92 and the injection tube 72 of the corresponding supplemental burner 7 are coupled to each other by welding or the like. Then, the duct 92 with the supplemental burner 7 is inserted into a supplemental burner mounting hole 83 formed in the casing 8. At this stage, the casing 8 and the supplemental burner 7 are not coupled to each other yet, and the supplemental burner 7 is movable with respect to the supplemental burner mounting hole 83. Then, as shown in Fig. 6(b), the liner 9 is inserted through the tip end of the casing 8. While the liner 9 is inserted through the tip end of the casing 8, the exit-side end portion 922 of each of the ducts 92 is fitted into the corresponding through-hole 90 provided in the liner 9. Then, as shown in Fig. 6(c), the burner unit 20 is mounted on the head portion of the liner 9, the casing 8 and the burner unit 20 are coupled to each other, and the casing 8 and the supplemental burners 7 are coupled to each other. Through the above-described procedure, the liner 9, the burner unit 20, the supplemental burners 7, and the ducts 92 are mounted on the casing 8, and thus the combustor 2 can be assembled.

Now, the operation of the combustor 2 will be described with reference to Fig. 2. During start-up of the gas turbine engine GT, the pilot burner 6 injects the first fuel F1 to the upstream portion of the combustion chamber 10. This first fuel F1 is ignited by an ignition plug (not shown), and combusted while being diffused, in the primary combustion region S1.

During a normal operation (running) state of the gas turbine engine GT, the main burners 5 inject the first premixed air-fuel M1 to the primary combustion region S1 of the combustion chamber 10 in a state in which the pilot burner 6 continues to supply the first fuel F1. Thus, the first fuel F1 in the first premixed air-fuel M1 is lean-premix-combusted by use of a flame of the pilot burner 6 as a pilot flame. The opening rates of the flow rate control valves 58, 63 are adjusted so that the air-fuel ratio (air flow rate/fuel flow rate) of each of the main burners 5 and the pilot burner 6 becomes a proper value.

The secondary combustion region S2 is formed to increase an operation range (running range) to a high power range according to a change in an operation load (running load) of the gas turbine engine GT. To this end, at a time point when the operation load of the gas turbine engine GT becomes larger than a predetermined value, the supplemental burners 7 inject the second premixed air-fuel M2 to the secondary combustion region S2 of the combustion chamber 10. Thus, in the secondary combustion region S2, the first fuel F1 and the second fuel F2 in the second premixed air-fuel M2 are lean-premix-combusted. The flame holding performance of the primary combustion region S1 is ensured by the main burners 5 and the pilot burner 6.

The opening rates of the flow rate control valves 27, 29 are adjusted so that the ratio between the first fuel F1 and the second fuel F2 and the air-fuel ratio (air flow rate/fuel flow rate), of the second premixed air-fuel M2 become proper values. In this combustor 2, deficiency of the second fuel F2 is supplemented by the first fuel F1. For example, in a case where a by-product hydrogen gas generated in a chemical plant is used as the second fuel F2, and deficiency of the second fuel F2 occurs due to, for example, shut-down of the chemical plant, a desired high power operation (running) can be maintained by opening the flow rate control valve 27 and by supplying the first fuel F1 of the first fuel source 24 from the supplemental burners 7 to the secondary combustion region S2.

As described above, the gas turbine combustor 2 according to the present embodiment is the gas turbine combustor 2 which combusts the fuel F1 and the fuel F2 with the compressed air A supplied from the compressor 11, and supplies the combustion gas to the turbine 13, the gas turbine combustor 2 including the casing 8 coupled to the main housing H of the turbine 13, the liner 9 having in an inside thereof the combustion chamber 10 extending in the axial direction X, the main burners 5 provided at the head portion of the liner 9, the supplemental burners 7 each of which includes the injection port 70 located in a region (air passage 22) formed between the liner 9 and the casing 8, and injects the air-fuel mixture in which the supplemental burning fuel containing hydrogen and the compressed air A taken in through the region (air passage 22) between the liner 9 and the casing 8 are mixed with each other, and the ducts 92. The upstream portion 901 including the head portion, of the liner 9, is accommodated in the casing 8, while the downstream portion 902 (located downstream of the upstream portion 901) of the liner 9 is accommodated in the main housing H. Each of the ducts 92 includes the entrance 92in connected to the injection port 70 of the supplemental burner 7, and the exit 92out which opens inside the combustion chamber 10. At least a portion of a region of each of the ducts 92, the region extending from the entrance 92in to the exit 92out, extends in parallel with the axial direction X.

In the combustor 2 with the above-described configuration, the second premixed air-fuel M2 (supplemental burning fuel) injected from the injection port 70 of each of the supplemental burners 7, flows through the duct 92 and is injected from the exit of the duct 92 to the combustion chamber 10. Therefore, the exit 92out of the duct 92 is a location where the second premixed air-fuel M2 is injected to the combustion chamber 10. The location where the second premixed air-fuel M2 is injected to the combustion chamber 10 can be made more distant in the axial direction X from the injection port 70 of each of the supplemental burners 7, by providing the duct 92. The easiest method of facilitating mixing between the supplemental burning fuel and the compressed air is to extend the premix passage. By providing the duct 92, it becomes possible to ensure a longer premix passage in which the gas containing hydrogen and the compressed air A are premixed. By realizing the longer premix passage, mixing between the supplemental burning fuel and the compressed air A can be facilitated, and the air-fuel mixture (second premixed air-fuel M2) in which the supplemental burning fuel and the compressed air A have been sufficiently mixed, is injected to the combustion chamber 10. As a result, combustion efficiency of the supplemental burner 7 can be improved, and emission amount of NOx can be reduced.

In the gas turbine combustor 2 according to the present embodiment, the exit 92out of each of the ducts 92 opens in the combustion chamber 10 at the downstream portion 902 of the liner 9. In other words, the injection port 70 of each of the supplemental burners 7 is provided inside the casing 8, and the location where the second premixed air-fuel M2 is injected to the combustion chamber 10 is provided inside the main housing H of the turbine 13.

Thus, a region in the axial direction X, from the head portion of the liner 9 to the injection port 70 of each of the supplemental burners 7, is covered by the casing 8. The dimension in the axial direction X, of the casing 8, can be reduced while ensuring the sufficient length of the premix passage. In other words, the amount of a protruding portion of the casing 8 of the combustor 2, from the main housing H of the turbine 13, can be reduced.

In the combustor 2 according to the present embodiment, each of the ducts 92 includes the air introduction ports 924 via which the space (air passage 22) formed between the liner 9 and the casing 8, and the inside of the duct 92 are in communication with each other, at the locations that are in the vicinity of the exit 92out.

In this configuration, the compressed air A in the air passage 22 can be introduced into each of the ducts 92 through the air introduction ports 924. The compressed air A introduced into each of the ducts 92 flows substantially in parallel with the second premixed air-fuel M2, along the inner wall of the duct 92, so that the fluid velocity on the inner wall surface of the duct 92 is increased. This makes it possible to suppress generation of the backfire at the exit 92out of each of the ducts 92.

In the combustor 2 according to the present embodiment, each of the supplemental burners 7 is supported by the casing 8, the entrance-side end portion 921 of each of the ducts 92 is secured to the supplemental burner 7, and the exit-side end portion 922 of each of the ducts 92 is inserted into the through-hole 90 provided in the liner 9, with an allowance (the exit-side end portion 922 is loosely inserted into the through-hole 90).

In this configuration, even in a case where a difference between a thermal deformation amount of the duct 92 and a thermal deformation amount of a portion of the liner 9 which is in the vicinity of the through-hole 90, occurs, it becomes possible to avoid a situation in which a thermal stress concentrates on the exit-side end portion 922 of the duct 92 and a region which is in the vicinity of the exit-side end portion 922 of the duct 92.

### [Modified Example]

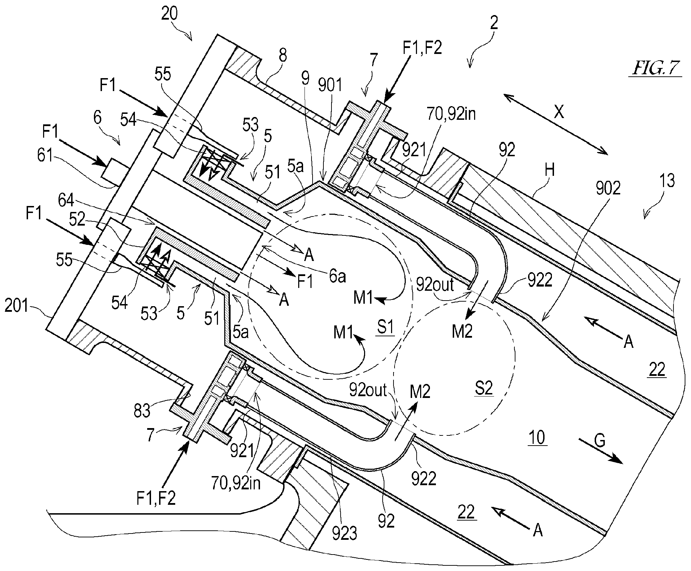

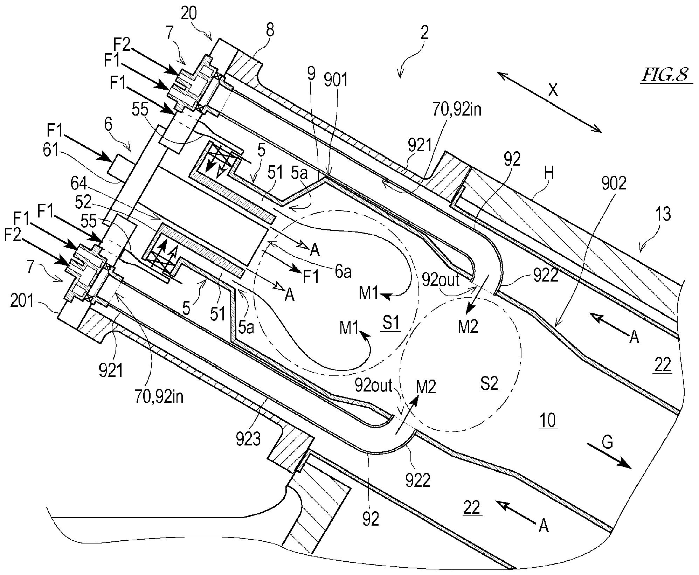

Next, Modified Examples of the above-described embodiment will be described. Fig. 7 is a view showing Modified Example 1 of arrangement of the supplemental burners 7. Fig. 8 is a view showing Modified Example 2 of arrangement of the supplemental burners 7. In description of Modified Examples 1, 2, the same constituents as those of the above-described embodiment, and the constituents corresponding to those of the above-described embodiment, are designated by the same reference symbols in the drawings, and will not be described in repetition.

In the combustor 2 according to the above-described embodiment, the supplemental burners 7 are supported by the peripheral wall of the casing 8, the injection port 70 of each of the supplemental burners 7 opens in the direction parallel to the radial direction perpendicular to the axial direction X, and the exit 92out of each of the ducts 92 opens in the direction parallel to the radial direction. In accordance with this arrangement of the supplemental burners 7, piping for the supplemental burners 7 can be easily performed while avoiding piping for the burner unit 20. In addition, in the combustor 2 according to the present embodiment, by connecting the ducts 92 to the injection ports 70 of the supplemental burners 7, respectively, the supplemental burners 7 can be arranged more flexibly. The arrangement of the supplemental burners 7, including the opening direction of the injection ports 70, is not limited to the above-described embodiment.

For example, in the combustor 2 according to Modified Example 1 of Fig. 7, the supplemental burners 7 are supported by the peripheral wall of the casing 8, the injection port 70 of each of the supplemental burners 7 opens in the direction parallel to the axial direction X in the air passage 22, and the exit 92out of each of the ducts 92 opens in the direction parallel to the radial direction.

More specifically, the supplemental burners 7 are arranged so that the open direction of the entrances of the fuel introduction passages 75, 76 through which the fuel is introduced into the supplemental burners 7 is substantially perpendicular to the opening direction of the injection port 70 of each of the supplemental burners 7. The supplemental burners 7 are secured to the casing 8 so that the entrances of the fuel introduction passages 75, 76 of each of the supplemental burners 7 protrude from the side wall of the casing 8 and the injection port 70 of each of the supplemental burners 7 opens in the direction parallel to the axial direction X in the air passage 22.

In the combustor 2 according to Modified Example 1, since the injection port 70 of each of the supplemental burners 7 opens in the direction parallel to the axial direction X, each of the ducts 92 has a J-shape. The number of bending of the duct 92 with a J-shape is less than that of the duct 92 with a S-shape. The duct 92 with a J-shape can suppress a pressure loss of the second premixed air-fuel M2.

For example, in the combustor 2 according to Modified Example 2 of Fig. 8, the supplemental burners 7 are arranged around the main burners 5, and are supported by a flange 201 of the burner unit 20. The supplemental burners 7 are secured to the flange 201 so that the entrances of the fuel introduction passages 75, 76 of each of the supplemental burners 7 protrude from the flange 201 in the axial direction X and the injection port 70 of each of the supplemental burners 7 opens in the direction parallel to the axial direction X in the air passage 22. In this case, since the flange 201 is provided at the head portion of the liner 9, the pipe length of each of the ducts 92 can be made larger and the premix passage with a larger length for the second premixed air-fuel M2 can be formed.

The preferred embodiment (and Modified example) of the present invention have been described above. For example, the above-described configuration can be changed as follows.

Although each of the supplemental burners 7 according to the above-described embodiment is configured to introduce two kinds of fuel, which are the first fuel F1 and the second fuel F2, into one fuel introduction block 71, mix the first fuel F1 and the second fuel F2 with the compressed air A in the injection tube 72, and inject the air-fuel mixture, the configuration of the supplemental burners 7 is not limited to this. For example, each of the supplemental burners 7 may be configured to introduce one kind of fuel into one fuel introduction block 71, mix this fuel with the compressed air A in the injection tube 72, and inject the air-fuel mixture.

Although the combustion method of the main burners 5 according to the above-described embodiment is the premix combustion method, the combustion method of the main burners 5 may be a diffusion combustion method.

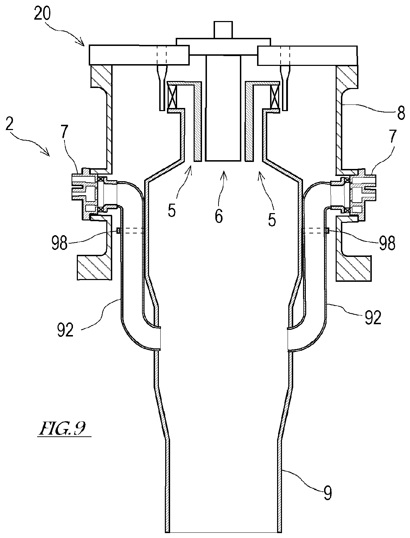

Although each of the ducts 92 according to the above-described embodiment is supported by the casing 8 via the supplemental burner 7, the support structure of the duct 92 is not limited to this. For example, in Modified Example of the support structure of the ducts 92 of Fig. 9, the entrance 92in of each of the ducts 92 may be disposed to face the injection port 70 of the supplemental burner 7, the exit-side end portion 922 of each of the ducts 92 may be inserted into the through-hole 90 provided in the liner 9, with an allowance (the exit-side end portion 922 may be loosely inserted into the through-hole 90), and the axial extension portion 923 of each of the ducts 92 may be retained by a retaining member 98 provided at the liner 9. The retaining member 98 may be, for example, a U-shaped metal band, having an end portion joined to the liner 9. In this case, the combustor 2 can be assembled by inserting the ducts 92 into the casing 8, and mounting the supplemental burners 7 and the burner unit 20 on the casing 8, in a state in which the ducts 92 are retained by the liner 9.

In Modified Example of the support structure of the ducts 92 described above, the supplemental burner 7 and the duct 92 are not secured (fixed) to each other, and the through-hole 90 of the liner 9 and the duct 92 are not secured to each other. This makes it possible to avoid a situation in which the thermal stress locally concentrates on the duct 92, even in a case where a difference between the thermal deformation amount of the duct 92 and the thermal deformation amount of the liner 9 occurs. Further, the combustor 2 can be easily assembled.

The description is to be construed as illustrative only, and is provided for the purpose of teaching those skilled in the art the best mode of carrying out the invention. The details of the structure and/or function may be varied substantially without departing from the spirit of the invention.

### Reference Signs List

- 1: gas turbine combustor
- 5: main burner
- 6: pilot burner
- 7: supplemental burner
- 8: casing
- 9: liner
- 10: combustion chamber
- 11: compressor
- 13: turbine
- 20: burner unit
- 22: air passage
- 92: duct
- 92: in entrance
- 92: out exit
- 98: retaining member
- 901: upstream portion
- 902: downstream portion
- 921: entrance-side end portion
- 922: exit-side end portion
- 924: air introduction port
- A: compressed air
- GT: gas turbine engine
- H: main housing
- S1: primary combustion region
- S2: secondary combustion region

## Claims

1. A gas turbine combustor which combusts fuel with compressed air supplied from a compressor, and supplies a combustion gas to a turbine, the gas turbine combustor comprising:
a casing coupled to a main housing of the turbine;
a liner having a configuration in which a combustion chamber extending in an axial direction of the gas turbine combustor is formed inside the liner, an upstream portion including a head portion of the liner is accommodated in the casing, and a downstream portion located downstream of the upstream portion is accommodated in the main housing;
a main burner provided at the head portion of the liner;
a supplemental burner including an injection port located between the liner and the casing, the supplemental burner being configured to inject an air-fuel mixture in which supplemental burning fuel containing hydrogen and the compressed air taken into the supplemental burner through a space formed between the liner and the casing are mixed; and
a duct including an entrance connected to the injection port of the supplemental burner and an exit which opens in the combustion chamber, the duct having a structure in which at least a portion of a region extending from the entrance to the exit extends in parallel with the axial direction.

2. The gas turbine combustor according to claim 1,
wherein the exit of the duct opens in the combustion chamber at the downstream portion of the liner.

3. The gas turbine combustor according to claim 1 or 2,
wherein the duct includes an air introduction port at a location that is in the vicinity of the exit, the space formed between the liner and the casing and an inside of the duct being in communication with each other via the air introduction port.

4. The gas turbine combustor according to any one of claims 1 to 3,
wherein the supplemental burner is supported by a peripheral wall of the casing, and the injection port of the supplemental burner opens in a direction parallel to a radial direction perpendicular to the axial direction, and
wherein the exit of the duct opens in the direction parallel to the radial direction.

5. The gas turbine combustor according to any one of claims 1 to 3,
wherein the supplemental burner is supported by a peripheral wall of the casing, and the injection port of the supplemental burner opens in a direction parallel to the axial direction, and
wherein the exit of the duct opens in a direction parallel to a radial direction perpendicular to the axial direction.

6. The gas turbine combustor according to any one of claims 1 to 3,
wherein the supplemental burner is disposed around the main burner, and the injection port of the supplemental burner opens in a direction parallel to the axial direction, and
wherein the exit of the duct opens in a direction parallel to a radial direction perpendicular to the axial direction.

7. The gas turbine combustor according to any one of claims 1 to 6,
wherein an entrance-side end portion of the duct is secured to the supplemental burner, and an exit-side end portion of the duct is inserted into a through-hole provided in the liner with an allowance.

8. The gas turbine combustor according to any one of claims 1 to 6,
wherein the entrance of the duct is disposed to face the injection port of the supplemental burner, an exit-side end portion of the duct is inserted into a through-hole provided in the liner with an allowance, and at least a portion of the region extending from the entrance of the duct to the exit of the duct, is retained by a retaining member provided at the liner.
